# EUROPEAN PATENT APPLICATION

(11) **EP 2 784 736 A1**
(43) Date of publication of application: **01.10.2014**
(21) Application number: 13305387.6
(22) Date of filing: 28.03.2013
(51) Int. Cl.: G06Q 30/02, G06F 17/30

(54) **Method of and system for providing access to data**

(71) Applicant: Thomson Licensing, 92130 Issy-les-Moulineaux (FR)
(72) Inventor: Hellier, Pierre, 35235 Thorigné Fouillard (FR); Démoulin, Vincent, 35160 Montfort sur Mer (FR); Oisel, Lionel, 35137 La Nouaye (FR); Pérez, Patrick, 35200 Rennes (FR)
(74) Representative: Lindemann, Robert

(57) **Abstract**

A method of providing information about an object to a user includes capturing a live image of a scene including the object and reproducing the live image on a screen. A single user input targeting the object on the screen is received, and a still image is captured in response to the user input. A single object is identified in the image in accordance with the location of the single user input, and information about the previously identified object is retrieved from a database. The information related to the object retrieved from the database is reproduced to the user.

## Description

### FIELD OF THE INVENTION

The invention relates to a method of and a system for providing access to supplementary data about real objects.

### BACKGROUND

Today's smartphones and similar devices can be used to obtain almost any information about almost any object, or person for that matter, in almost any place at almost any time. However, such information retrieval can be cumbersome for a user, as the typical way of accessing information is through a search engine using an internet browser. The search request needs to be entered manually, and search keywords may not be correctly describing the object about which a user is trying to obtain information.

More recently, location-based services appeared on smartphones, which use location information provided for example through Global Positioning System (GPS) or its Russian equivalent GLONASS for determining the position of a user on Earth's surface, and which provide information about places and objects in the vicinity to a user. While this was an improvement in terms of usability and convenience it is still arbitrary and not user-controlled.

Further developments resulted in a service known as City Lens or City-Kompass, an augmented reality application provided by Nokia Corporation, Finland, that overlays information over a real life video image reproduced on the screen as it is captured, enhanced through positional and locational information obtained through compass, tilt, motion and GPS/GLONASS sensor inputs to match the captured image.

Another service that evolved having a different focus is Google Inc.'s "Translate" application, which can translate text in photos between different languages. The user must highlight the text in the photo prior to the text being translated.

All of these services still require quite some user interaction before the desired result is available, and also are relatively limited as to the type of object or place information can be had.

### SUMMARY OF THE INVENTION

It is, therefore, desirable to improve the user interface for more simplicity and extend the range of objects about which information can be obtained.

A method of providing information about an object to a user in accordance with the present invention includes capturing a live image of a scene including the object and reproducing the live image on a screen. A single user input targeting the object on the screen is received, in response to which a still image is captured. A single object in the image is identified in accordance with the location of the single user input on the screen, and information about the previously identified object from is retrieved from a database. Eventually, the information related to the object retrieved from the database is reproduced to the user.

According to one embodiment of the invention the inventive method is implemented in a device that provides the user interface, captures the image and performs the object recognition. The database can be provided in the device, or can be located outside the device, accessible through a wired or wireless data connection.

In case the device cannot perform the object identification, according to one embodiment of the invention, the device transmits the captured image along with information about the location of the single user input on the screen relative to the live image reproduced on the screen, to an information providing device. Such device can be a server running an object recognition service that returns information related to the object. Such information includes, for example, search keywords that are automatically provided to a web browser in the user device, for initiating a corresponding web search. However, it is also conceivable that the information providing device provides results of a web or database search relating to the object to the user device. In an embodiment of the invention the expected type of response of the information providing device is user-configurable through a configuration menu or dialog in the user device.

An information providing device in accordance with the embodiment described before includes a processor, program and data memory, and a data interface for connecting to a user device and/or a database. The device is adapted to receive, from the user device, a still image showing at least the object as well as information about the location of a user input indicating the relative position of the object in the still image. The information providing device is further adapted to identify a single object in accordance with the received still image and supplementary data, and to retrieve, from a database, information related to the object. The information providing device is further adapted to transmit the information related to the object to the user device.

In a further embodiment of the invention, further data is used for identifying a single object, for retrieving information about the single object, or for both purposes. The further data includes a geographical position of the place where the still image was taken, or the time of day when the still image was taken, or any other supplementary data that can generally be used for improving object recognition and/or the relevance of data on the object. For example, if a user takes a still image of a movie poster while being in a town's cinema district, such information is useful for enhancing the object recognition as well as for filtering or prioritizing information relating to when the movie is played, and in which cinema.

In one embodiment, once the user is presented the results of the object recognition and/or the information related to the object, he/she is offered further options for interaction, e.g. select one or more items from a results list for subsequent reproduction, or making a purchase or booking relating to the object, e.g. buy a cinema ticket for a certain show. Other options include offering to show audiovisual content relating to the object, e.g. a film trailer in case the object was a film poster, or providing information about the closest cinema currently showing the movie on the film poster.

Generally, supplementary information or data relating to the object is provided in response to the object identification or recognition, including any kind of textual data, audio and/or video, or a combination thereof.

In one embodiment further contextual information is used for sorting the results provided in response to the object identification or recognition. For example, when the user is located in a city's cinema hotspot, a picture of a movie poster will produce information about when and where the movie is shown as first items on a list. In case a picture of an object in a museum is shot, information related with similar objects in museums can be prioritized for display. Also, object recognition is likely to be easier when the location is recognized as being inside a museum.

The invention advantageously simplifies the user interface and reduces the number of user interactions while providing desired information or options. In one embodiment a single touch interaction on a live image suffices to produce a plethora of supplementary information that is useful to a user. The invention can be used in many other contexts not related to cinemas and films. For example, applying the invention to art objects, e.g. street art or the like, will produce further information about the artist, or can indicate where to find more art objects from the same artist, from the same era, or of the same style. The invention is simply useful for easily obtaining information about almost any common object that can be photographed. The invention can also be implemented through a web-based service, enabling use of the method for connected user devices having limited computational capabilities.

### BRIEF DESCRIPTION OF THE DRAWINGS

The invention will now be described with reference to the attached drawing, in which
- Fig. 1: shows an exemplary photograph of an object and the location of the user input as taken in accordance with the present invention;
- Fig. 2: shows a simplified view of the rear side of a camera implementing the invention;
- Fig. 3: shows a flow diagram of the method in accordance with an embodiment the invention;
- Fig. 4: shows details of a flow diagram of the method in accordance with a further embodiment of the invention;
- Fig. 5: shows a block diagram of a device in accordance with one aspect of the invention; and
- Fig. 6: shows a block diagram of a device in accordance with a further aspect of the invention.

In the figures, like elements are referenced with the same reference designators.

### DETAILED DESCRIPTION OF EMBODIMENTS

In one embodiment of the invention a mobile communication device provided with camera functionality serves as hardware basis to implement the method according to the present invention.

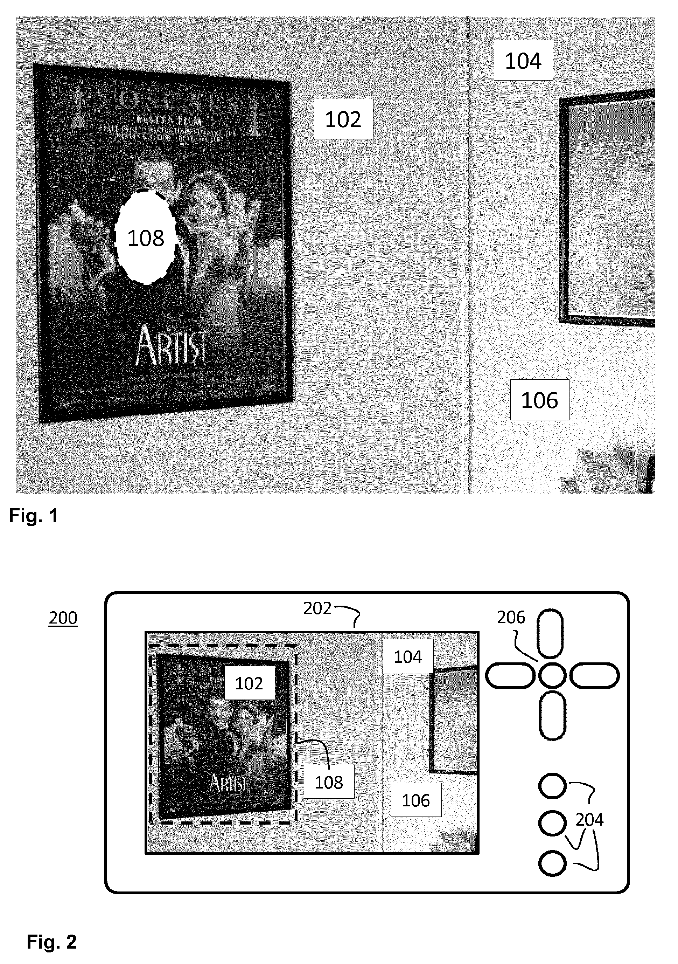

Figure 1 shows an exemplary still image of an object and the location of the user input as taken in accordance with the present invention. The still image shows a film poster, 102, along with other objects, 104, 106. Oval spot 108 represents a location where a user has touched the live image on a touch screen, in response to which touch the still image was taken. The touch input can be replaced through other kinds of user interaction in case a touch screen is not available. Other suitable ways of providing the user input include a cursor or other mark that is moved across the screen, for example by means of corresponding directional cursor keys, a trackball, a mouse, or any other pointing device, and that is positioned over the object. Oval spot 108 is located on film poster 102. The location information is used for singling out film poster 102 from the other objects present on the still image. Location can be given in terms of pixels in x and y direction from a predetermined origin, or in terms of ratio with regard to the image width and height, or in other ways. An object identification process uses the location information for determining the most probable single object in relation to the location of the user input. In the present example this is relatively simple, as the object has well defined borders and distinguishes well from the background. However, advanced object recognition is capable of singling out objects having more irregular shapes and having less defined borders with respect to the background. For example, a Gaussian radial model is used for extracting points of interest in relation to the location of the user interaction, wherein more points of interest are extracted closer to the exact location of the user interaction, and lesser and lesser points are extracted with increasing distance to the exact location of the user interaction. This greatly improves robustness of the object identification and recognition. Depending on the implementation of the invention some part of the process of singling out an object can be performed on a user's device, while a remaining part is performed on a connected remote device. Such load sharing reduces the amount of data that needs to be transmitted, and can also speed up the entire process.

In a development the location of user input is highlighted prior to identifying the object using the still image and the user input location data, or prior to sending the image and corresponding user input location data to an information providing device. In a further development a user conformation confirming the user input location is required prior object identification.

In a variant of the invention the location of an object of interest to the user is provided through circling the object on the screen, or through a gesture that is akin to the pinch-to-zoom operation on modern smartphones and tablets. Such two-finger gesture can be used for opening a square bounding box that a user adjusts to entirely fit the object of interest, for example as shown by the dashed square box 108 surrounding film poster 102 in figure 2. This user defined bounding box will greatly enhance the object recognition process, and can also be used for cropping the image prior to object identification and recognition. In case the object identification and recognition is performed remotely to the user device, cropping decreases the amount of data to be transmitted through reducing the size of the still image to be transmitted.

Also, as discussed further above, in one embodiment of the invention the location of the user input is used for focusing the camera lens to that specific part of the image prior capturing the still image.

Figure 2 shows a simplified view of the rear side of a camera 200 including a display screen 202, an arrangement of cursor control buttons 206 and further control buttons 204. The image shown on the display screen corresponds to the image of figure 1, and the reference designators in the image are the same. Film poster 102 is surrounded by a square box, 108, indicating the object of interest. In one embodiment the square box is placed and sized using the arrangement of cursor control buttons 206. It is, however, also conceivable to size and place the box using the pinch-to-zoom-like gesture discussed further above.

In other embodiments of the invention the object of interest is marked through non-touch gestures, e.g. a finger or any other pointing device floating over the object represented on the screen or in front of the lens. It is also conceivable to use eye-tracking techniques for marking an object of interest to a user.

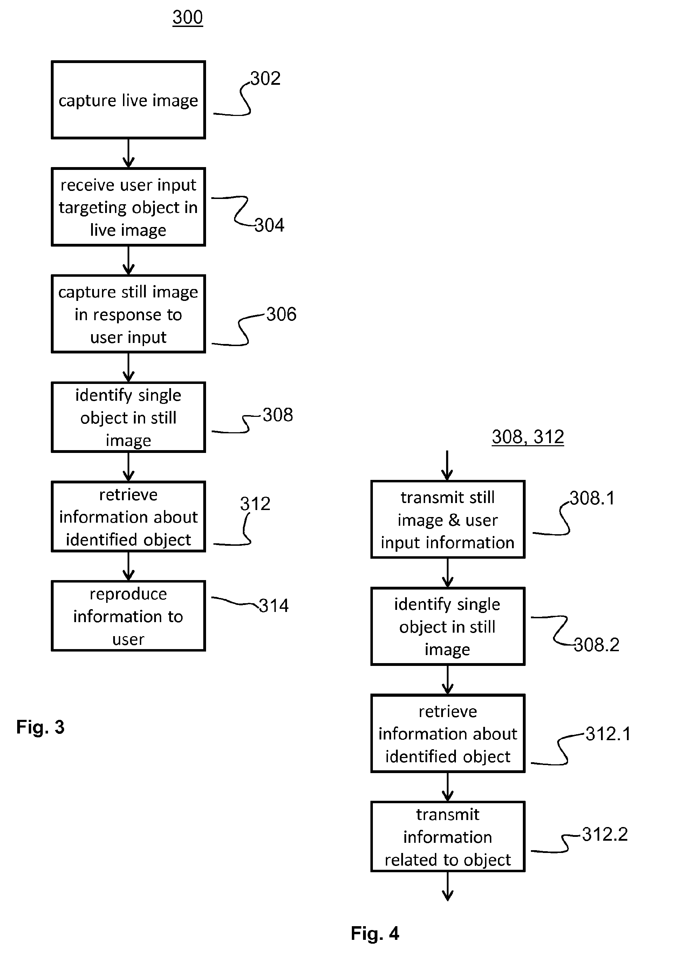

Figure 3 shows a flow diagram of the method in accordance with an embodiment of the invention. The first step of flow 300 is capturing a live image of whatever scene a user wishes to obtain information about, or, more particular, of a scene including an object about which a user desires to obtain information, step 302. Once the live image shows the object that is of interest to the user, the user provides an input on the screen targeting the object, step 304. This input is for example a user's finger touching the screen at the location where the object is shown, as described further above. Once the user input targeting the object is completed, a still image is captured in response, step 306. In a development the user input is additionally be used for focusing that part of the image corresponding to the location of the object, in an otherwise known manner. The focusing aspect is generally applicable to all embodiments described in this specification.

The object in the still image targeted by the user input is identified or recognized in step 308. Then, information about the identified or recognized object is retrieved, step 312. Information retrieval is for example accomplished through a corresponding web search, or, more general, a corresponding database search using descriptors relating to the object and obtained in the identification or recognition stage. In one embodiment the database is provided in the user device that executes the method, or is accessible through a wired or wireless data connection. In one embodiment object identification includes local feature descriptors and/or matching the object in the still image with objects from a database.

The information retrieved is provided to the user and reproduced in a user-perceptible way, step 314, including but not limited to reproducing textual information on the screen or playing back audio and/or video information.

In one embodiment of the invention the identification step 308 and the image retrieval step 312 are performed by a device remote from a user device that runs a part of the method. This embodiment is described with reference to figure 4. In step 308.1 the still image and information about the location of the user input is transmitted to an information providing device that performs identification of the object a user wishes to obtain information about, step 308.2. Then, step 312.1, the information providing device retrieves information about the object previously identified. Information retrieval is done in the same way as described with reference to figure 3. The information about the object obtained in the previous step is then transmitted, step 312.2, to the user device, for further processing, reproduction, etc., for example as described with reference to figure 3.

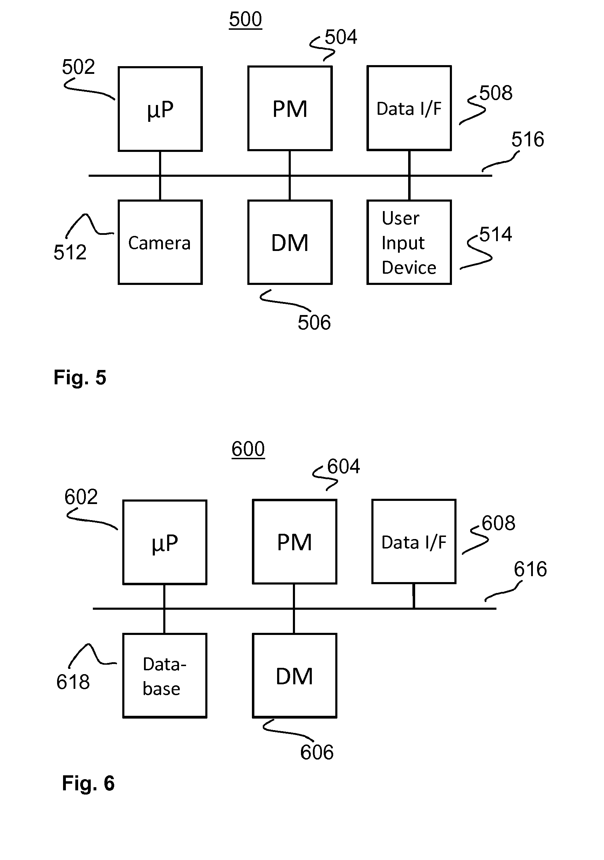

Figure 5 shows a block diagram of a user device 500 in accordance with the invention. Microprocessor 502 is operationally connected with program memory 504, data memory 506, data interface 508, camera 512 and user input device 514 via bus connection 516. Bus connection 516 can be a single bus, or a bus system that suitably splits connections between a plurality of buses. Data interface 508 can be of the wired or wireless type, e.g. a local area network, or LAN, or a wireless local area network, or WLAN. Other kinds of networks are also conceivable. Data memory 506 holds data that is required during execution of the method in accordance with the invention and/or holds object reference data required for object identification or recognition. In one embodiment data memory 506 represents a database that is remote to user device 500. Such variation is within the capability of a skilled person, and is therefore not explicitly shown in this or other figures. Program memory 504 holds software instructions for executing the method in accordance with the present invention as described in this specification and in the claims.

Figure 6 shows a block diagram of an information providing device 600 in accordance with the invention. Microprocessor 602 is operationally connected with program memory 604, data memory 606, data interface 608 and data base 618 via bus connection 616. Bus connection 616 can be a single bus, or a bus system that suitably splits connections between a number of buses. Data interface 608 can be of the wired or wireless type, e.g. a local area network, or LAN, or a wireless local area network, or WLAN. Other kinds of networks are also conceivable. Data memory 606 holds data that is required during execution of the method in accordance with the invention and/or holds object reference data required for object identification or recognition. Data base 618 represents a database attached to information providing device 600 or a general access to a web-based collection of databases. Program memory 604 holds software instructions for executing the method in accordance with the present invention as described in this specification and in the claims.

## Claims

1. A method of providing information about an object to a user, including the steps of:
- capturing a live image of a scene including the object and reproducing the live image on a screen;
- receiving a user input targeting the object on the screen;
- capturing a still image in response to the user input;
- identifying a single object in the image in accordance with the user input;
- retrieving information about the previously identified object from a database; and
- reproducing the information related to the object retrieved from the database.

2. The method of claim 1, wherein the steps of identifying a single object in the image in accordance with the user input and retrieving information about the previously identified object from a database include:
- transmitting the still image, along with information about the location of the user input relative to the live image reproduced on the screen, to an information providing device; and
- receiving, from the information providing device, information related to the single object.

3. A method of providing information about an object to a user device, including the steps of:
- receiving, from the user device, a still image showing at least the object, as well as information about the location of a user input indicating the position of the object in the still image;
- identifying a single object in the still image in accordance with the user input indicating the position of the object in the still image;
- retrieving, from a database, information related to the single object; and
- transmitting the information related to the single object to the user device.

4. The method of any one of claims 2 to 3, including transmitting further data recorded when capturing still image, the further data including but not being limited to one or more of geographical position information and local time information.

5. The method of claim 1, wherein information about the previously identified object is obtained from a database in accordance with further data recorded when capturing the still image, the further data including but not being limited to one or more of geographical position information and local time information.

6. The method of claims 4 or 5, wherein the information related to the object is filtered or prioritized in accordance with the further data recorded when capturing the still image.

7. The method of any one of the preceding claims, wherein an option for further user-interaction is offered to the user in response to the reproduction of the information to the user.

8. The method of one of claims 1 to 3, wherein a set of information items retrieved from the database is reproduced to the user, for selective reproduction of one or more individual items from the set.

9. A device having a processor, program and data memory, a camera, a data interface, user input device, wherein the device is adapted to carry out a method in accordance with one or more of claims 1, 2 or 5.

10. A device having a processor, program and data memory, a data interface, data base, wherein the device is adapted to carry out a method in accordance with claim 3.
